(19) Europäisches Patentamt
European Patent Office
Office européen des brevets

(11) **EP 1 600 065 B1**

(12) **EUROPÄISCHE PATENTSCHRIFT**

(45) Veröffentlichungstag und Bekanntmachung des Hinweises auf die Patenterteilung:
**09.12.2009  Patentblatt 2009/50**

(51) Int Cl.:
*A23L 2/76* *(2006.01)*     *B01D 19/00* *(2006.01)*

(21) Anmeldenummer: **05010695.4**

(22) Anmeldetag: **18.05.2005**

(54) **Verfahren und Vorrichtung zum Entfernen von gelösten Gasen aus flüssigen Lebensmitteln, insbesondere aus Fruchtsäften**

Process and apparatus for removing dissolved gas from liquid foods, especially fruit juices

Procédé et dispositif d'élimination de gaz dissous dans des aliments liquides, notamment des jus de fruit.

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **29.05.2004  DE 102004026459**

(43) Veröffentlichungstag der Anmeldung:
**30.11.2005  Patentblatt 2005/48**

(73) Patentinhaber: **Binnig, Rupert, Prof. Dipl.-Ing. 54341 Fell-Fastrau (DE)**

(72) Erfinder: **Binnig, Rupert, Prof. Dipl.-Ing. 54341 Fell-Fastrau (DE)**

(74) Vertreter: **Serwe, Karl-Heinz Patentanwalt, Südallee 34 54290 Trier (DE)**

(56) Entgegenhaltungen:
**DE-A1- 19 736 671     GB-A- 481 711 US-A- 2 634 907**

EP 1 600 065 B1

## Beschreibung

Die Erfindung betrifft ein Verfahren und eine Vorrichtung zum Entfernen von gelösten Gasen aus flüssigen Lebensmitteln, insbesondere aus Fruchtsäften, durch Zentrifugieren der flüssigen Lebensmittel.

Aus der US-A-2634907 ist eine Zentrifuge zum Entgasen von Flüssigkeiten, aus der GB-A-481711 ist eine Zentrifuge zur Behandlung von Apfelmost und aus der DE-A-19736671 ist eine Vorrichtung zum Entgasen von Flüssigkeiten bekannt.

In flüssigen Lebensmitteln stellen gelöste Gase deshalb ein Problem dar, weil diese Gase beim Erhitzen zum Haltbarmachen und beim Fördern und Abfüllen meist unlöslich werden und als Schaum aufschwimmen.

Solche Schaumschichten in der Verpackung bzw. in der Flasche behindern einerseits eine saubere, sorgfältige Abfüllung und eine ordnungsgemäße Füllmenge, andererseits werden durch solche aufschwimmenden Schaumblasen suspendierte Partikel und Trubstoffe im Getränk flotiert und bilden dann einen unansehnlichen Pfropfen im Flaschenhals.

Gase im Fruchtsaft stammen aus der natürlichen Sättigung durch die Gase der Erdatmosphäre $N_2$ und $O_2$. Ebenso sind in den Produkten aus biologischer Rohware Stoffwechselgase (meist $CO_2$) in oft beträchtlicher Menge gelöst. Unter Atmosphärendruck gesättigtes Wasser enthält bei 10°C in einem Liter ca. 18 mg $N_2$, was 15 ml Normgas entspricht, und ca. 10 mg $O_2$, was 7 ml Normgas entspricht.

Große Mengen an $CO_2$ werden aber auch durch gelöste Carbonate in die Produkte eingetragen. Durch veränderte Säuregehalte werden diese Carbonate dissoziieren und $CO_2$ freisetzen. Wird z.B. mit Trinkwasser von 10° dH aus Fruchtsaftkonzentrat Fruchtsaft hergestellt, so sind je nach Zusammensetzung des Wassers und der Carbonate darin etwa 150 bis 200 mg/l $CO_2$ frei, entsprechend ca. 100 ml Normgas.

In einem Fruchtsaft können je nach Herstellung vor der Abfüllung bis zu 150 ml Gas enthalten sein. Diese Gasmengen sind aber nicht wie oft angenommen wird, echt gelöst, sondern in der Hauptsache in Form von mikrofeinen Gasblasen in der Flüssigkeit suspendiert. Dabei spielt das Ausbilden der Phasengrenze durch die umgebende Flüssigkeit eine bedeutende Rolle. An der Grenzfläche von Gas und Flüssigkeit kommt es grundsätzlich zu einer Orientierung von Molekülen und damit zur Ausbildung von stabilen Nanostrukturen an der Phasengrenze.

Dies ist vor allem der Grund, warum bisherige Entgasungsverfahren nicht besonders wirksam sind. Das Versprühen von solchen gashaltigen Flüssigkeiten im Vakuum schafft meist eine weitere stabile Phasengrenze, die verhindert, dass sich die Gase in ihrer Blasenhülle ausdehnen und eventuell platzen.

Die meisten flüssigen Lebensmittel enthalten eine Vielzahl von sturkturgebenden Inhaltsstoffen, so dass davon auszugehen ist, dass Gase in solchen Flüssigkeiten grundsätzlich in sehr feste, sehr elastische Schaumhüllen/Grenzflächenstrukturen eingepackt sind. Der Gehalt und die jeweilige Art an Proteinen und Lipiden und die jeweils daran entstehenden festen Hydrathüllen sind für die Schaumstabilität verantwortlich.

Bisherige Entgasungsverfahren, die bei erhöhter Temperatur und mit Vakuumtechnik Gase aus der Flüssigkeit entfernen sollen, haben den Nachteil, dass vor allem für Aromen der Siedepunkt weit überschritten wird und anstelle von Gasen vor allem Aroma aus dem Produkt entfernt wird.

Eine Fruchtsaftentgasung sollte deshalb nur weit unter dem Siedepunkt von Aromastoffen stattfinden. Deshalb sollten Gase aus flüssigen Lebensmitteln nicht durch Vakuumverdampfungen entfernt werden.

Unter Berücksichtigung der Erkenntnis, dass Gase weitgehend in Gasblasen mit teilweise sehr festen Grenzflächen in den Lebensmitteln verteilt sind, besteht die Aufgabe darin, die Blasen nicht zerstören zu wollen, sondern die Gasblasen mit ihrer Phasengrenzen-Hülle aus der Flüssigkeit zu entfernen.

Diese Aufgabe wird dadurch gelöst, dass die flüssigen Lebensmittel unter einem Überdruck zentrifugiert werden, der größer als der Dampfdruck der Gasblasen der flüssigen Lebensmittel ist.

Mit den Zentrifugen nach der US-A-2634907, der GB-A-481711 und der Vorrichtung nach der DE-A-19736671 ist ein Zentrifugieren unter Überdruck nicht vorgesehen.

Das Entfernen der Gasblase erfolgt somit in einer beschleunigten Sedimentation unter Überdruck im Zentrifugalfeld, da zwischen Gasblase und umgebender Flüssigkeit ein deutlicher Dichteunterschied herrscht.

Für das Trennverfahren auf der Grundlage eines Dichtunterschiedes gilt das STOKE' sche Gesetz:

$$W = \frac{d^2 \left( \rho_{Part} - \rho_{Flüss.} \right)}{18\,\eta}\ g\ bzw.\ z$$

**dabei gilt:**

w = Sink- bzw. Aufsteiggeschwindigkeit

**d = Partikeldurchmesser**

**ρ = Dichte des Partikels bzw. der Flüssigkeit**

**η = Viskosität der Flüssigkeit**

**g = Erdbeschleunigung**

**z = Schleuderziffer**

Die Größe von Gasblasen ist maßgeblich für das Aufsteigen verantwortlich. Solange Gasblasen sehr klein und in einer relativ viskosen Flüssigkeit verteilt sind, wird die Aufrahmgeschwindigkeit fast Null. Wird durch Temperaturerhöhung das Gasvolumen vergrößert und der Blaseninnendruck erhöht, ist in der Regel Koaleszenz zu beobachten, d.h. kleine Blasen verschwinden zugunsten der größer werdenden großen Blasen.

Die Dichtedifferenz zwischen Gasblasen und umgebender Flüssigkeit ist sehr groß. Fruchtsäfte und Fruchtgetränke haben' eine Dichte von 1020 bis 1060 kg/m$^3$. Die Dichte von Gasen beträgt etwa 1/1000. (Dichte $CO_2$ = 1.6 kg/m$^3$ bei 100 °C, Dichte Luft = 0.916 kg/m$^3$ bei 100 °C).

Die Viskosität der kontinuierlichen Phase liegt im Bereich von 1 bis 100 mPas und wird deutlich durch die Temperatur beeinflusst. Ein unbekannter Faktor ist die Wirkung der molekular-struktuierten Phasengrenzfläche zwischen Gas und Flüssigkeit, der Schaumblasenhülle. Da sich dort im komplexen Medium Fruchtsaft/flüssige Lebensmittel hydrohile-lipophile Strukturen ausbilden und Konzentrationen sich partiell ändern, lässt sich die Steiggeschwindigkeit von Gasblasen nicht einfach berechnen. Trenngeschwindigkeiten können deshalb nur experimentell ermittelt werden.

Vorteilhaft wird zur Durchführung des Verfahrens eine Zentrifuge verwendet, die eine Zentrifugenkammer mit einem Zulauf mit Ventil für das flüssige gashaltige Lebensmittel, einen Auslauf mit Ventil für das flüssige gasfreie Lebensmittel, einen Auslauf mit Ventil für das Gas und eine zentrale topfartige Zentrifugentrommel aufweist, die um ihre Topfachse antreibbar ist. Vorteilhaft sind die Innenwände der Zentrifugenkammer und die Innen- und Außenwände der topfartigen Zentrifugentrommel weitgehend glatt ausgebildet.

Vorteilhaft führt der Zulauf für das flüssige gashaltige Lebensmittel in das Innere der topfartigen Zentrifugentrommel. Vorzugsweise führt der Zulauf für das flüssige gashaltige Lebensmittel in die Topfachse der topfartigen Zentrifugentrommel. Bei einer bevorzugten Ausführungsform endet der Zulauf für das flüssige gashaltige Lebensmittel etwa in halber Höhe der topfartigen Zentrifugentrommel.

Nach einer vorteilhaften Ausführungsform ist der Auslauf für das flüssige gasfreie Lebensmittel am Boden der Zentrifugenkammer angeordnet.

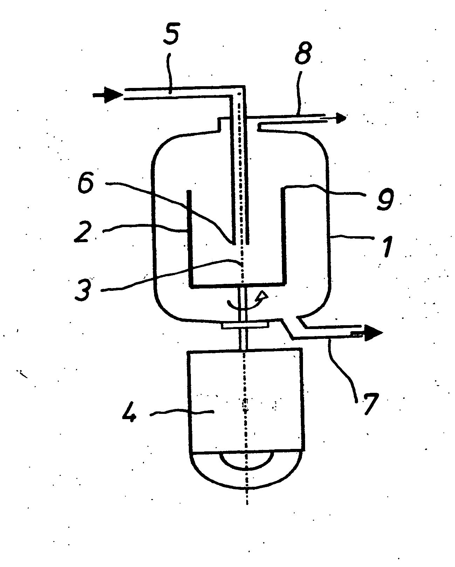

Vorteilhaft ist der Auslauf für das Gas am Kopf der Zentrifugenkammer angeordnet. Die erfindungsgemäße Zentrifuge ist in der Zeichnung beispielhaft dargestellt.

In einer runden Zentrifugenkammer 1 mit weitgehend glatten Innenflächen ist eine runde topfartige oben offene Zentrifugentrommel 2 angeordnet, die um ihre mit 3 bezeichnete Topfachse durch einen Antrieb 4 in Drehung versetzt werden kann. Die Zentrifugentrommel 2 weist weitgehend glatte Innen- und Außenwände auf.

Ein Zulauf 5 für das flüssige gashaltige Mittel führt in der Topfachse 3 in das Innere der Zentrifugentrommel 2, wobei das Ende 6 des Zulaufs 5 etwas unterhalb der Mitte der Höhe der Zentrifugentrommel 2 endet.

Am Boden der Zentrifugenkammer ist ein Auslauf 7 für das flüssige gasfreie Lebensmittel vorgesehen. Am Kopf der Zentrifugenkammer 1 befindet sich ein Auslauf 8 für das Gas.

Das flüssige gashaltige Lebensmittel wird unter Druck über den Zulauf 5 in die Zentrifugentrommel 2 eingebracht, die durch den Antrieb 4 in Drehung versetzt ist. Das flüssige gashaltige Lebensmittel überströmt dann den Behälterrand 9 der Zentrifugentrommel 2 und gelangt so in die Zentrifugenkammer 1, um schließlich über den Auslauf 7 die Zentrifuge zu verlassen.

Damit das Zentrifugieren unter Druck erfolgen kann, sind im Zulauf 5 und im Auslauf 7 und 8 entsprechende, nicht dargestellte Ventile angeordnet.

In der Zentrifugenkammer 1 und in der Zentrifugentrommel 2 wird das flüssige Lebensmittel zentrifugal beschleunigt, so dass die schwerere Flüssigkeit an der Peripherie der Zentrifugenkammer abgenommen und die Gasblasen als Schaum im Zentrum der rotierenden Flüssigkeit abgeschieden werden und über den Auslauf 8 abgeschieden werden.

Mit dieser Zentrifuge sind bei entsprechender konstruktiver Anpassung 5.000 bis 25.000 1 Fruchtsaft pro Stunde zu entgasen. Die besonderen hygienischen Anforderungen werden durch die geschlosse, dichte Konstruktion gewährleistet, die selbsttätig reinigungsfähig ist, d.h. alle produktberührenden Oberflächen sind vollständig überströmbar. Darüber hinaus ist die Zentrifuge bei Medienwechsel vollständig entleerbar. Die Zentrifuge ist weiter sterilisierbar, d.h. thermisch und mechanisch bis 120 °C temperaturbeständig.

Mit der beschriebenen Zentrifuge konnte gezeigt werden, dass die Theorie der Gasblasen-Abtrennung durch zentrifugale Beschleunigung zutrifft. Dazu wurde carbonisierter Fruchtsaft im Durchlauf auf 50 °C erwärmt und durch die Zentrifugal-Entgasungseinrichtung gefördert. Nach dem Abkühlen im Gegenstrom auf die Ausgangstemperatür von 10 °C war der $CO_2$-Gasgehalt immer kleiner als 10% des Sättigungswertes. Damit war ein Aufschäumen der Getränke vollständig unterbunden.

Im praktischen Betriebsablauf wird zur Abfüllung' von Fruchtsaft zur Haltbarmachung auf Temperaturen von 75-95 °C erhitzt, je nach Verpackungstechnologie entweder heiß in Gasflaschen gefüllt oder nach Inline-Abkühlung mit 20 °C in Kartonverpackungen verpackt. Bei allen Verpackungsprozessen existieren erhebliche Schaumprobleme, die zu Produkt- und Leistungsverlusten führen.

Durch die Zwischenschaltung der erfindungsgemäßen Zentrifugalentgasung in den Erhitzungsprozess werden ohne weiteren größeren Aufwand die schaumbildenden Gase entfernt, und die Verpackung/Abfüllung optimiert, schäumende Produkte, aufschwimmende pfropfenbildende Trubbestandteile und unvollständig gefüllte Packungen gehören der Vergangenheit an.

Während bisher eingesetzte Entgasungsanlagen teilweise sehr lange Verweilzeiten bei hohen Temperaturen und damit erhebliche Produktschädigungen bewirken, kann bei der erfindungsgemäßen Technologie die Verweilzeit bei hohen Temperaturen sehr gering sein und damit die Hitzeschädigung der Produkte stark minimiert werden.

Da die Entgasung unter Überdruck und im geschlossenen System stattfindet, sind auch keine Aromaverluste zu erwarten. Die wertvollen Fruchtaromen werden üblicherweise durch aufwändige Technologien zuerst aus Früchten gewonnen, sorgfältig bis zum Verbrauch gelagert und dann den Fruchtsaftprodukten präzise zudosiert.

Bei der Entgasung im Vakuum werden diese recht teuren Aromabestandteile dann wieder abgedampft, durch die Dampftemperaturen thermisch verändert, wieder durch Tiefkühlung kondensiert und dann unkontrolliert dem Fruchtsaft wieder zudosiert. Aromaveränderungen und Verluste sind das bisher unvermeidliche Problem der bisherigen Vakuumtechnologie.

**Patentansprüche**

1. Verfahren zum Entfernen von gelösten Gasen aus flüssigen Lebensmitteln, insbesondere aus Fruchtsäften, durch Zentrifugieren der flüssigen Lebensmittel, **dadurch gekennzeichnet, dass** die flüssigen Lebensmittel unter einem Überdruck zentrifugiert werden, der größer als der Dampfdruck der Gasblasen der flüssigen Lebensmittel ist.

2. Verfahren nach Anspruch 1, **dadurch gekennzeichnet, dass** die flüssigen Lebensmittel im Durchlauf zentrifugiert werden.

3. Zentrifuge zur Durchführung des Verfahrens nach einem der Ansprüche 1 oder 2, **gekennzeichnet durch** eine Zentrifugenkammer (1) mit einem Zulauf (5) mit Ventil für das flüssige gashaltige Lebensmittel, einem Auslauf (7) mit Ventil für das flüssige gasfreie Lebensmittel, einem Auslauf (8) mit Ventil für das Gas und einer zentralen topfartigen Zentrifugentrommel (2), die um ihre Topfachse (3) antreibbar ist.

4. Zentrifuge nach Anspruch 3, **dadurch gekennzeichnet, dass** die Innenwände der Zentrifugenkammer (1) und die Innen- und Außenwände der topfartigen Zentrifugentrommel (2) weitgehend glatt ausgebildet sind.

5. Zentrifuge nach Anspruch 3 oder 4, **dadurch gekennzeichnet, dass** der Zulauf (7) für das flüssige gashaltige Lebensmittel in das Innere der topfartigen Zentrifugentrommel (2) führt.

6. Zentrifuge nach Anspruch 5, **dadurch gekennzeichnet, dass** der Zulauf (7) für das flüssige gashaltige Lebensmittel in die Topfachse (3) der topfartigen Zentrifugentrommel (2) führt.

7. Zentrifuge nach Anspruch 5 oder 6, **dadurch gekennzeichnet, dass** der Zulauf (5) für das flüssige gashaltige Lebensmittel etwa in halber Höhe der topfartigen Zentrifugentrommel (2) endet.

8. Zentrifuge nach einem der Ansprüche 3 bis 7, **dadurch gekennzeichnet, dass** der Auslauf (7) für das flüssige gasfreie Lebensmittel am Boden der Zentrifugenkammer (1) angeordnet ist.

9. Zentrifuge nach einem der Ansprüche 3 bis 8, **dadurch gekennzeichnet, dass** der Auslauf (8) für das Gas am Kopf der Zentrifugenkammer (1) angeordnet ist.

**Claims**

1. Method of removing dissolved gases from liquid food, particularly from fruit juices, by centrifuging the liquid food, **characterised in that** the liquid food is centrifuged under excess pressure greater than the vapour pressure of the gas bubbles in the liquid food.

**2.** Method according to claim 1, **characterised in that** the liquid food is centrifuged continuously.

**3.** Centrifuge for carrying out the method according to either of claims 1 or 2, **characterised by** a centrifuge chamber (1) comprising an inlet (5) with a valve for the liquid gas-containing food, an outlet (7) with a valve for the liquid gas-free food, an outlet (8) with a valve for the gas and a central pot-shaped centrifuge basket (2) which can be driven about its pot axis (3).

**4.** Centrifuge according to claim 3, **characterised in that** the inner walls of the centrifuge chamber (1) and the inner and outer walls of the pot-shaped centrifuge basket (2) are substantially smooth.

**5.** Centrifuge according to claim 3 or claim 4, **characterised in that** the inlet (7) for the liquid gas-containing food leads into the interior of the pot-shaped centrifuge basket (2).

**6.** Centrifuge according to claim 5, **characterised in that** the inlet (7) for the liquid gas-containing food leads into the pot axis (3) of the pot-shaped centrifuge basket (2).

**7.** Centrifuge according to claim 5 or claim 6, **characterised in that** the inlet (5) for the liquid gas-containing food ends at approximately mid-height of the pot-shaped centrifuge basket (2).

**8.** Centrifuge according to one of claims 3 to 7, **characterised in that** the outlet (7) for the liquid gas-free food is arranged on the bottom of the centrifuge chamber (1).

**9.** Centrifuge according to one of claims 3 to 8, **characterised in that** the outlet (8) for the gas is arranged on the top of the centrifuge chamber (1).


**Revendications**

**1.** Procédé d'élimination de gaz dissous dans des aliments liquides, notamment des jus de fruit, par centrifugation des aliments liquides, **caractérisé en ce que** les aliments liquides sont centrifugés à une surpression qui est supérieure à la pression de vapeur des bulles de gaz des aliments liquides.

**2.** Procédé selon la revendication 1, **caractérisé en ce que** les aliments liquides sont centrifugés en fonctionnement continu.

**3.** Centrifugeuse destinée à mettre en oeuvre le procédé selon l'une des revendications 1 ou 2, **caractérisée par** une chambre de centrifugation (1) comportant une entrée (5) dotée d'un clapet destiné aux aliments liquides contenant du gaz, une sortie (7) dotée d'un clapet destiné aux aliments liquides dépourvus de gaz, une sortie (8) dotée d'un clapet destiné au gaz et un tambour de centrifugation central (2) en forme de cuve qui peut être entraîné autour de son axe de cuve (3).

**4.** Centrifugeuse selon la revendication 3, **caractérisée en ce que** les parois intérieures de la chambre de centrifugation (1) et les parois intérieure et extérieure du tambour de centrifugation (2) en forme de cuve sont essentiellement lisses.

**5.** Centrifugeuse selon la revendication 3 ou 4, **caractérisée en ce que** l'entrée (7) destinée aux aliments liquides contenant du gaz débouche à l'intérieur du tambour de centrifugation (2) en forme de cuve.

**6.** Centrifugeuse selon la revendication 5, **caractérisée en ce que** l'entrée (7) destinée aux aliments liquides contenant du gaz débouche dans l'axe de cuve (3) du tambour de centrifugation (2) en forme de cuve.

**7.** Centrifugeuse selon la revendication 5 au 6, **caractérisée en ce que** l'entrée (5) destinée aux aliments liquides contenant du gaz se termine à peu près à mi-hauteur du tambour de centrifugation (2) en forme de cuve.

**8.** Centrifugeuse selon l'une des revendications 3 à 7, **caractérisée en ce que** la sortie (7) destinée aux aliments liquides dépourvus de gaz est disposée au fond de la chambre de centrifugation (1).

**9.** Centrifugeuse selon l'une des revendications 3 à 8, **caractérisée en ce que** la sortie (8) destinée au gaz est disposée au sommet de la chambre de centrifugation (1).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2634907 A
- GB 481711 A
- DE 19736671 A